(19) Europäisches Patentamt / European Patent Office / Office européen des brevets

(11) **EP 4 343 881 A1**

(12) **EUROPEAN PATENT APPLICATION**
published in accordance with Art. 153(4) EPC

(43) Date of publication:
**27.03.2024 Bulletin 2024/13**

(21) Application number: **22937665.2**

(22) Date of filing: **29.07.2022**

(51) International Patent Classification (IPC):
**H01M 4/13** (2010.01)    **H01M 4/139** (2010.01)
**H01M 10/052** (2010.01)

(86) International application number:
**PCT/CN2022/108953**

(87) International publication number:
**WO 2024/021018 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **ZHAO, Liya**
**Ningde City**
**Fujian 352100 (CN)**
• **LIU, Huihui**
**Ningde City**
**Fujian 352100 (CN)**
• **WANG, Long**
**Ningde City**
**Fujian 352100 (CN)**

(74) Representative: **Gong, Jinping**
**CocreateIP**
**Neumarkterstr. 21**
**81673 München (DE)**

(54) **UNDERCOAT ADHESIVE FOR DRY-METHOD ELECTRODE AND PREPARATION METHOD THEREFOR, COMPOSITE CURRENT COLLECTOR, BATTERY ELECTRODE PLATE, SECONDARY BATTERY, BATTERY MODULE, BATTERY PACK AND ELECTRIC DEVICE**

(57) The present application provides a primer adhesive for a dry electrode, wherein the primer adhesive comprises the following components in parts by mass: 30-70 parts of a modified polyolefin resin and 10-60 parts of a conductive material, wherein the modified polyolefin resin is a copolymer formed by the polymerization of maleic anhydride, polyolefin and a petroleum resin. The primer adhesive for a dry electrode of the present application can effectively improve the adhesive force between a dry electrode film layer and a current collector and also can reduce the volume resistivity of a battery electrode plate. The present application further provides a method for preparing the primer adhesive for a dry electrode, and a composite current collector comprising the primer adhesive for a dry electrode, a battery electrode plate, a secondary battery, a battery module, a battery pack, and a power consuming device.

EP 4 343 881 A1

**Description**

Technical Field

The present application relates to the technical field of lithium batteries, and in particular to a primer adhesive for a dry electrode, and a composite current collector comprising the primer adhesive for a dry electrode, a battery electrode plate, a secondary battery, a battery module, a battery pack, and a power consuming device.

Background Art

In recent years, with the increasingly wide application range of lithium-ion batteries, lithium-ion batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium ion batteries, higher requirements have also been placed on the lithium ion batteries in terms of energy density, cycling performance, safety performance, etc.

The electrode plates of lithium ion batteries are mostly prepared by means of a wet coating process. This process comprises dissolving and mixing an active substance, a conductive agent, and a binder in an organic solvent, and then coating same onto a surface of a current collector by means of extrusion coating or transfer coating, followed by baking. However, this process has the problems of long baking time and solvent recovery, which significantly increase the production cost and the complexity of the process. It is a new preparation process to prepare a battery electrode plate by means of a dry method. This process does not use a large amount of an organic solvent and is beneficial to increase the capacity and cycling life of a battery. However, during the process for preparing a dry electrode plate, since the surface of a current collector, such as an aluminum foil, is relatively smooth, it is difficult to ensure that a dry electrode film layer can be closely attached to the current collector. In addition, during the use of a battery, if the adhesive force between the dry electrode film layer and the current collector is insufficient, it is easy to cause the film layer to fall off, powder shedding, etc. which significantly affect the service life and safety performance of the battery. Therefore, strategies are needed to optimize the adhesive force between the dry electrode film layer and the current collector, thereby improving the service life and safety performance of a secondary battery.

Summary of the Invention

The present application has been made in view of the above problems, and the objects thereof are to provide a primer adhesive for a dry electrode to improve the adhesive force between a dry electrode film layer and a current collector and also reduce the volume resistivity of a battery electrode plate, and to provide a method for preparing the primer adhesive for a dry electrode, and a composite current collector comprising the primer adhesive for a dry electrode, a battery electrode plate, a secondary battery, a battery module, a battery pack, and a power consuming device.

In order to achieve the objects, a first aspect of the present application provides a primer adhesive for a dry electrode, the primer adhesive comprising the following components in parts by mass:

<blockquote>
30-70   parts of a modified polyolefin resin, and<br>
10-60   parts of a conductive material,
</blockquote>

wherein the modified polyolefin resin is a copolymer formed by the polymerization of maleic anhydride, polyolefin and a petroleum resin.

Therefore, compared with those in the prior art, the primer adhesive for a dry electrode of the present application can effectively improve the adhesive force between a dry electrode film layer and a current collector, particularly the adhesive force between a dry electrode film layer and a current collector which are soaked in an electrolyte solution for a long time, and can also reduce the volume resistivity of a battery electrode plate.

In any embodiment, the primer adhesive for a dry electrode comprises the following components in parts by mass:

<blockquote>
40-60   parts of the modified polyolefin resin, and<br>
20-50   parts of the conductive material.
</blockquote>

Adjusting and controlling the contents of the modified polyolefin resin and the conductive material in the primer adhesive for a dry electrode can further improve the adhesive force between a dry electrode film layer and a current collector and also further reduce the volume resistivity of a battery electrode plate.

In any embodiment, the modified polyolefin resin has a weight average molecular weight of 1,000,000-1,500,000. Adjusting and controlling the weight average molecular weight of the modified polyolefin resin can further improve the adhesive force between a dry electrode film layer and a current collector.

In any embodiment, the polyolefin is selected from one or more of: polyethylene, polypropylene, an ethylene-vinyl acetate copolymer, a styrene-butadiene copolymer, a styrene-ethylene-butylene-styrene block copolymer, a styrene-isoprene-styrene block copolymer and an amorphous poly $\alpha$-olefin resin; and optionally, the polyolefin is selected from one or more of: polyethylene, polypropylene, an ethylene-vinyl acetate copolymer, and a styrene-ethylene-butylene-styrene block copolymer. Selecting the polyolefin can further improve the adhesive force between a dry electrode film layer and a current collector.

In any embodiment, the conductive material is a carbon material selected from one or more of: carbon black, graphene, carbon nanotubes, graphite and mesophase carbon microspheres. Selecting the conductive material can further reduce the volume resistivity of a battery electrode plate.

In any embodiment, the mass ratio of the modified polyolefin resin to the conductive material is 0.8-1.7 : 1, optionally 1-1.4 : 1. Adjusting and controlling the mass ratio of the modified polyolefin resin to the conductive material can further improve the adhesive force between a dry electrode film layer and a current collector and further improve the volume resistivity of a battery electrode plate.

In any embodiment, the maleic anhydride, polyolefin and petroleum resin in the modified polyolefin resin satisfy the following formula:

$$0.1 \leq \frac{a1\,(a2+a3)}{a2*a3} \leq 0.7,$$

wherein a1 is the mass percentage of the maleic anhydride in the modified polyolefin resin, a2 is the mass percentage of the polyolefin in the modified polyolefin resin, and a3 is the mass percentage of the petroleum resin in the modified polyolefin resin. When the components of the modified polyolefin resin in the primer adhesive satisfy the above relationship, the adhesive force between a dry electrode film layer and a current collector can be further improved.

In any embodiment, the primer adhesive for a dry electrode further comprises 0.1-1 parts by mass, optionally 0.2-0.5 parts by mass of an additive, wherein the additive includes an antioxidant and an anti-aging agent. Selecting, adjusting and controlling the additive can improve the thermal stability and long-term storage of the primer adhesive.

In any embodiment, the primer adhesive for a dry electrode further comprises 1-10 parts by mass of paraffin wax. The paraffin wax can improve improve the adhesive performance of the primer adhesive.

A second aspect of the present application provides a method for preparing a primer adhesive for a dry electrode of the first aspect, the method comprising

　　S1) preparing a modified polyolefin resin; and
　　S2) mixing the modified polyolefin resin, a conductive material, an additive, and paraffin wax.

In any embodiment, the preparing a modified polyolefin resin comprises copolymerizing maleic anhydride, polyolefin and a petroleum resin at 150-180°C to obtain the modified polyolefin resin.

Thus, the primer adhesive for a dry electrode of the present application can be made.

A third aspect of the present application provides a composite current collector. The composite current collector comprises a primer adhesive layer, wherein the primer adhesive layer is provided on at least one surface of the current collector, the thickness of the primer adhesive layer on one surface of the current collector is 1-10 $\mu$m, optionally 5-8 $\mu$m, and the primer adhesive layer is formed by means of coating a primer adhesive for a dry electrode of the first aspect of the present application.

A fourth aspect of the present application provides a battery electrode plate, comprising a composite current collector of the third aspect of the present application; and a dry electrode film layer, wherein the dry electrode film layer is provided on the primer adhesive layer in the composite current collector.

A fifth aspect of the present application provides a secondary battery, comprising a battery electrode plate of the fourth aspect of the present application.

A sixth aspect of the present application provides a battery module, comprising a secondary battery of the fifth aspect of the present application.

A seventh aspect of the present application provides a battery pack, comprising a battery module of the sixth aspect of the present application.

An eighth aspect of the present application provides a power consuming device, comprising at least one selected from a secondary battery of the fifth aspect of the present application, a battery module of the sixth aspect of the present application, or a battery pack of the seventh aspect of the present application.

The battery module, the battery pack, and the power consuming device of the present application comprise the secondary battery provided by the present application, and thus have at least the same advantages as the secondary battery.

Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.

List of reference numerals:
1 - battery pack; 2 - upper box body; 3 - lower box body; 4 - battery module; 5 - secondary battery; 51 - housing; 52 - electrode assembly; 53 - top cover assembly

Detailed Description of Embodiments

Hereinafter, embodiments of a primer adhesive for a dry electrode, and a composite current collector comprising the primer adhesive, a battery electrode plate, a secondary battery, a battery module, a battery pack, and an electrical device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq$ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

It is a new lithium battery preparation process to prepare an electrode plate by means of a dry method. The dry electrode processing technology has the following advantages: 1) two procedures, i.e. the slurry homogenization and the baking of an electrode plate can be omitted, thereby reducing the occupied area of an electrode workshop, the direct investment for equipment, and the investment costs for equipment and factory construction; 2) due to the absence of an NMP solvent, which saves raw material costs and is beneficial for environmental safety, the environmental control and operational costs are reduced; and 3) the dry electrode plate can be used to make a thick electrode with a good flexibility and high safety and is expected to be used in the field of pre-lithiation and solid-state battery technology development. The patent CN 106654177 A proposes preparing a dry electrode plate by means of high-speed shear mixing a binder, which is prone to fibration, with an active material and a conductive agent, rolling pressing same several times by means of a roller press, and then combining same with a current collector having a conductive adhesive layer. No large amount of an organic solvent is used in the process, which is beneficial for increasing the capacity and the cycling life of a battery. However, the conductive adhesive layer coated on the surface of the current collector is a mixture of a conductive agent, which represents 98-99.5% of the total mass of the conductive adhesive, and 0.5-2% of a resin. Although the conductive adhesive layer contains a large amount of a conductive agent, since the adhesive force between a dry film layer and a current collector is relatively poor, on the one hand, the interfacial contact between the active material and the current collector is affected, thus hindering the electron transport and increasing the internal resistance of a cell, and on the other hand, it may also cause the electrode film layer to fall off, powder shedding, etc., during battery use, seriously affecting the service life and safety performance of a battery.

In view of the above problems, a first aspect of the present application provides a primer adhesive for a dry electrode, the primer adhesive comprising the following components in parts by mass:

| 30-70 | parts of a modified polyolefin resin, and |
| 10-60 | parts of a conductive material, |

wherein the modified polyolefin resin is a copolymer formed by the polymerization of maleic anhydride, polyolefin and a petroleum resin.

Although the mechanism is not yet clear, the applicant has unexpectedly discovered that the primer adhesive for a dry electrode of the present application can improve the adhesive force between a dry electrode film layer and a current collector and can also reduce the overall internal resistance of a battery electrode plate. In the primer adhesive of the present application, the modified polyolefin resin is a copolymer formed by the polymerization of maleic anhydride, polyolefin and a petroleum resin. Introducing maleic anhydride having a polar function to polyolefin further improves the polarity of the molecular chain segments, improves the adhesive force between a dry electrode film layer and a current collector, and particularly can effectively improve the adhesive force between a dry electrode film layer and a current collector which are soaked in an electrolyte solution for a long time, thus enhancing the interfacial contact between the active material and the current collector; meanwhile, the uniformly dispersed conductive material is also beneficial for the electron transport, thus can effectively avoid the battery performance deterioration caused by the fall off of the electrode film layer, powder shedding, etc., during use of the battery.

In some embodiments, the primer adhesive for a dry electrode comprises the following components in parts by mass:

| 40-60 | parts of the modified polyolefin resin, and |
| 20-50 | parts of the conductive material. |

Adjusting and controlling the contents of the modified polyolefin resin and the conductive material in the primer adhesive for a dry electrode can further improve the adhesive force between a dry electrode film layer and a current collector and also further reduce the volume resistivity of a battery electrode plate. If the content of the modified polyolefin resin is too high, it will lead to the excessive dispersion of the conductive material in the primer adhesive system, which is not conducive to the electron transport in the electrode plate; while if the content of the modified polyolefin is too low, it will lead to a reduced adhesive force between the electrode plate film layer and the current collector, which easily causes the electrode plate film layer to fall off during the use of the battery, thus affecting the service life and safety performance of the battery.

In some embodiments, the modified polyolefin resin has a weight average molecular weight of 1,000,000-1,500,000. Adjusting and controlling the weight average molecular weight of the modified polyolefin resin can further improve the adhesive force between a dry electrode film layer and a current collector.

In some embodiments, the polyolefin is selected from one or more of: polyethylene, polypropylene, an ethylene-vinyl acetate copolymer, a styrene-butadiene copolymer, a styrene-ethylene-butylene-styrene block copolymer, a styrene-isoprene-styrene block copolymer and an amorphous poly $\alpha$-olefin resin; and optionally, the polyolefin is selected from one or more of: polyethylene, polypropylene, an ethylene-vinyl acetate copolymer, and a styrene-ethylene-butylene-styrene block copolymer. Selecting the polyolefin can further improve the adhesive force between a dry electrode film layer and a current collector.

In some embodiments, the conductive material is a carbon material selected from one or more of: carbon black, graphene, carbon nanotubes, graphite and mesophase carbon microspheres. Selecting the conductive material can further reduce the volume resistivity of a battery electrode plate. In the present application, the conductive material may be granular, fibrous, flaky, etc., in shape. The conductive material has a Dv50 of 20 nm, wherein the $D_{50}$ is the corresponding particle size when the cumulative volume distribution percentage of a sample reaches 50%.

In some embodiments, the mass ratio of the modified polyolefin resin to the conductive material is 0.8-1.7 : 1, optionally 1-1.4 : 1. For example, the mass ratio may be 1 : 1, 1.1 : 1, 1.2 : 1, 1.3 : 1, or 1.4 : 1, but is not limited to the listed point values. When the mass ratio of the modified polyolefin resin to the conductive material satisfies the above ranges, the adhesive force between a dry electrode film layer and a current collector can be further improved, and the volume resistivity of a battery electrode plate can also be further reduced. If the content of the modified polyolefin resin is too high, it will lead to the excessive dispersion of the conductive material in the primer adhesive system, which is not conducive to the electron transport in the electrode plate; while if the content of the modified polyolefin is too low, it will lead to a reduced adhesive force between the electrode plate film layer and the current collector, which easily causes the electrode plate film layer to fall off during the use of the battery, thus affecting the service life and safety performance of the battery.

In some embodiments, the maleic anhydride, polyolefin and petroleum resin in the modified polyolefin resin satisfy the following formula:

$$0.1 \leq \frac{a1(a2+a3)}{a2*a3} \leq 0.7,$$

wherein a1 is the mass percentage of the maleic anhydride in the modified polyolefin resin, a2 is the mass percentage of the polyolefin in the modified polyolefin resin, and a3 is the mass percentage of the petroleum resin in the modified polyolefin resin. Introducing maleic anhydride having a polar function to polyolefin further increase the polarity of the molecular chain segments in the modified polyolefin resin, thereby improving the adhesive force between a dry electrode film layer and a current collector. When the components of the modified polyolefin resin in the primer adhesive, namely, maleic anhydride, polyolefin and the petroleum resin, satisfy the above relationship, the adhesive force between a dry electrode film layer and a current collector can be further improved.

In some embodiments, the primer adhesive for a dry electrode further comprises 0.1-1 parts by mass, optionally 0.2-0.5 parts by mass of an additive. For example, it may be 0.2, 0.3, 0.4, or 0.5 parts by mass but is not limited to the listed point values, and any numerical value within the above ranges is also applicable. The additive includes an antioxidant and an anti-aging agent. Selecting, adjusting and controlling the additive can improve the thermal stability and long-term storage of the primer adhesive, preventing the primer adhesive from carbonizing or aging at a high temperature and affecting the performance thereof.

In some embodiments, the primer adhesive for a dry electrode further comprises 1-10 parts by mass of paraffin wax. For example, it may be 1, 2, 3, 4, 5, 6, 7, 8, 9, or 10 parts by mass but is not limited to the listed point values, and any numerical value within the above range is also applicable. The paraffin wax can improve the adhesive performance of the primer adhesive, which is conducive to improving improving the adhesive force between a dry electrode film layer and a current collector.

A second aspect of the present application provides a method for preparing a primer adhesive for a dry electrode of the first aspect, the method comprising

S1) preparing a modified polyolefin resin; and
S2) mixing the modified polyolefin resin, a conductive material, an additive, and paraffin wax.

In some embodiments, the preparing a modified polyolefin resin comprises copolymerizing maleic anhydride, polyolefin and a petroleum resin at 150-180°C to obtain the modified polyolefin resin. For example, the temperature may be 150°C, 160°C, 170°C or180°C and is not limited to the listed point values, and any numerical value within the above range is also applicable.

The description and definition for the modified polyolefin resin, conductive material, additive and paraffin wax in the description of the primer adhesive for a dry electrode are also applicable to the method for preparing the primer adhesive.

A third aspect of the present application provides a composite current collector. The composite current collector comprises a primer adhesive layer, wherein the primer adhesive layer is provided on at least one surface of the current collector, and the thickness of the primer adhesive layer on one surface of the current collector is 1-10 $\mu$m, optionally 5-8 $\mu$m. For example, the thickness may be 5 $\mu$m, 6 $\mu$m, 7 $\mu$m, 8 $\mu$m, 9 $\mu$m, or 10 $\mu$m but is not limited to the listed point values, and any numerical values within the above ranges is also applicable. The primer adhesive layer is formed by means of coating a primer adhesive for a dry electrode of the first aspect of the present application.

In the present application, the current collector may be a metal foil, for example, an aluminum foil, or a copper foil. The current collector may also be one that comprises a polymer material substrate and a metal layer formed on at least one surface of the polymer material substrate, which can be prepared by forming a metal material (aluminum, aluminum alloys, copper, copper alloys, nickel, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

A fourth aspect of the present application provides a battery electrode plate, comprising a composite current collector of the third aspect of the present application; and a dry electrode film layer, wherein the dry electrode film layer is provided on the primer adhesive layer in the composite current collector.

In some embodiments, the battery electrode plate is prepared by attaching the composite current collector of the third aspect of the present application with a dry electrode film layer by means of a hot pressing process, wherein the temperature of the hot pressing process is 120-180°C. For example, the temperature may be 120°C, 130°C, 140°C, 150°C, 160°C, 170°C or 180°C but is not limited to the listed point values, and any numerical value within the above range is also applicable.

In the present application, the dry electrode film layer is prepared by a method known to those skilled in the art, for example, the dry electrode film layer disclosed in patent CN 106654177 A.

A fifth aspect of the present application provides a secondary battery, comprising a battery electrode plate of the fourth aspect of the present application.

A sixth aspect of the present application provides a battery module, comprising a secondary battery of the fifth aspect of the present application.

A seventh aspect of the present application provides a battery pack, comprising a battery module of the sixth aspect of the present application.

An eighth aspect of the present application provides a power consuming device, comprising at least one selected from a secondary battery of the fifth aspect of the present application, a battery module of the sixth aspect of the present application, or a battery pack of the seventh aspect of the present application.

In addition, the secondary battery, battery module, battery pack and power consuming device of the present application are described below with reference to the accompanying drawings as appropriate.

In one embodiment of the present application, a secondary battery is provided.

Typically, a secondary battery comprises a positive electrode plate, a negative electrode plate, an electrolyte and a separator. During the charge/discharge of the battery, active ions are intercalated and de-intercalated back and forth between a positive electrode plate and a negative electrode plate. The electrolyte functions to conduct ions between the positive electrode plate and the negative electrode plate. The separator is provided between the positive electrode plate and the negative electrode plate, and mainly prevents the positive and negative electrodes from short-circuiting and enables ions to pass through.

[Positive electrode plate]

The positive electrode plate comprises a positive electrode composite current collector of the present application and a positive electrode film layer provided on at least one surface of the positive electrode composite current collector. The positive electrode composite current collector comprises a primer adhesive layer, wherein the primer adhesive layer is provided on at least one surface of the current collector, and the thickness of the primer adhesive layer on one surface of the current collector is 1-10 $\mu$m, optionally 5-8 $\mu$m. For example, the thickness may be 5 $\mu$m, 6 $\mu$m, 7 $\mu$m, 8 $\mu$m, 9 $\mu$m, or 10 $\mu$m, but is not limited to the listed point values, and any numerical values within the above ranges is also applicable. The primer adhesive layer is formed by means of coating a primer adhesive for a dry electrode of the present application.

In the present application, the current collector may be a metal foil, e.g., an aluminum foil. The current collector may also be one that comprises a polymer material substrate and a metal layer formed on at least one surface of the polymer material substrate, which can be prepared by forming a metal material (aluminum, aluminum alloys, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

As an example, a metal foil, such as an aluminum foil, has two opposite surfaces in its own thickness direction and can be provided with a primer adhesive layer on either or both of the two surfaces, and a positive electrode film layer is provided on the surface that has a primer adhesive of the two opposite surfaces of the metal foil.

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, etc. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPOa$), lithium manganese phosphate and carbon composites, lithium iron manganese phosphate, and lithium iron manganese phosphate and carbon composites.

In some embodiments, the positive electrode film layer further comprises a binder which can be fibered. As an example, the binder may include at least one of polyvinylidene fluoride (PVDF), polytetrafluoroethylene (PTFE), a styrene-butadiene rubber, polypropylene, polyethylene, and an ethylene-vinyl acetate copolymer (EVA) which can be fibered.

In some embodiments, the positive electrode film layer further optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the mass ratio of the positive electrode active material, the conductive agent and the binder, which can be fibered, in the positive electrode film layer is 70-90 : 5-10 : 3-10.

In some embodiments, the dry positive electrode film layer can be prepared by: mixing the above-mentioned components for preparing the positive electrode film layer, such as a positive electrode active material, a conductive agent, a binder which can be fibered and any other components, subjecting same to a fibration treatment to obtain a highly-fibered mixed material, and then rolling the mixed material to obtain a continuous, self-supported dry positive electrode film layer.

In some embodiments, the positive electrode plate can be obtained by attaching a positive electrode composite current collector with a dry positive electrode film layer by means of a hot pressing process, wherein the temperature of the hot pressing process is 120-180°C.

[Negative electrode plate]

The negative electrode plate comprises a negative electrode composite current collector of the present application and a negative electrode film layer provided on at least one surface of the negative electrode composite current collector. The negative electrode composite current collector comprises a primer adhesive layer, wherein the primer adhesive layer is provided on at least one surface of the current collector, and the thickness of the primer adhesive layer on one surface of the current collector is 1-10 μm, optionally 5-8 μm. For example, the thickness may be 5 μm, 6 μm, 7 μm, 8 μm, 9 μm, or 10 μm, but is not limited to the listed point values, and any numerical values within the above ranges is also applicable. The primer adhesive layer is formed by means of coating a primer adhesive for a dry electrode of the present application.

In the present application, the current collector may be a metal foil, e.g., a copper foil. The current collector may also be one that comprises a polymer material substrate and a metal layer formed on at least one surface of the polymer material substrate, which can be prepared by forming a metal material (copper, copper alloys, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

As an example, a metal foil, such as a copper foil, has two opposite surfaces in its own thickness direction and can be provided with a primer adhesive layer on either or both of the two surfaces, and a positive electrode film layer is provided on the surface that has a primer adhesive of the two opposite surfaces of the metal foil.

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more. The negative electrode active material may have have an average particle size ($D_{50}$) of 12 $\mu$m-22 $\mu$m, wherein the $D_{50}$ is the corresponding particle size when the cumulative volume distribution percentage of a sample reaches 50%.

The positive electrode film layer further comprises a binder which can be fibered. As an example, the binder may include at least one of polyvinylidene fluoride (PVDF), polytetrafluoroethylene (PTFE), a styrene-butadiene rubber, polypropylene, polyethylene, and an ethylene-vinyl acetate copolymer (EVA) which can be fibered.

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)), etc.

In some embodiments, the mass ratio of the negative electrode active material, the conductive agent and the binder, which can be fibered, in the negative electrode film layer is 70-90 : 5 - 10 : 3-10.

In some embodiments, the dry negative electrode film layer can be prepared by: fibering the above-mentioned components for preparing the negative electrode film layer, such as a negative electrode active material, a conductive agent, a binder which can be fibered and any other components to obtain a highly-fibered mixed material, and then rolling the mixed material to obtain a continuous, self-supported dry negative electrode film layer.

In some embodiments, the negative electrode plate can be obtained by attaching a negative electrode composite current collector with a dry negative electrode film layer by means of a hot pressing process, wherein the temperature of the hot pressing process is 120-180°C.

[Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

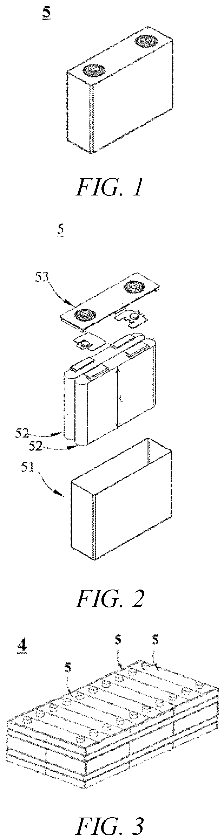

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

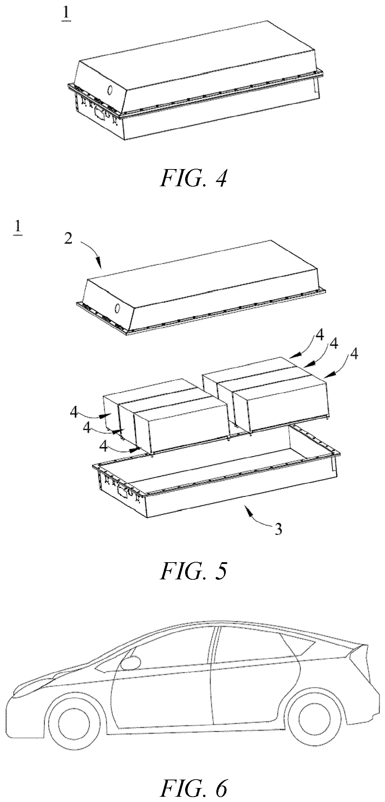

Fig. 4 and Fig. 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

I. Raw materials

Graphene (purchased from Guangdong Kaijin New Energy Technology Co., Ltd.)
Carbon black (purchased from Guangdong Kaijin New Energy Technology Co., Ltd.)
Antioxidant (thanox1726, purchased from Tianjin Rianlon New Materials Co., Ltd.)
Anti-aging agent (Tinuvin326, purchased from BASF)
Paraffin wax (58#, purchased from China Petroleum & Chemical Corporation)
Petroleum resin (C5/C9, purchased from Shandong Tianzhao Chemical Co., Ltd.)
Maleic anhydride ($C_4H_2O_3$, CAS: 108-31-6, purchased from Zibo Qixiang Tengda Chemical Co., Ltd.)
Polyethylene (PE, CAS: 9002-88-4, with a molecular weight of 800,000-1,200,000, purchased from China Petroleum & Chemical Corporation)
Polypropylene (PP, CAS: 9003-07-0, with a molecular weight of 1,200,000-1,500,000, purchased from China Petroleum & Chemical Corporation)
Ethylene-vinyl acetate copolymer (EVA, CAS: 24937-78-8, with a molecular weight of 800,000-1,200,000, the content of vinyl acetate being in a range of 5%-50%, purchased from Mitsui Chemicals, Inc., Japan)
Styrene-butadiene copolymer (SBS, CAS: 9003-55-8, with a molecular weight of 500,000-800,000, purchased from Shanghai Aladdin Bio-Chem Technology Co., Ltd.)
Styrene-ethylene-butylene-styrene block copolymer (SEBS, G1654 X, with a molecular weight of 500,000-800,000, purchased from KRATON, USA)
Styrene-isoprene-styrene block copolymer (SIS, D1163, with a molecular weight of 500,000-800,000, purchased from KRATON, USA)
Amorphous poly α-olefin resin (APAO, VESTOPLAST 508, with a molecular weight of 500,000-800,000, purchased from Degussa)

Example 1

1. Preparation of primer adhesive

Polypropylene, maleic anhydride, a styrene-ethylene-butylene-styrene block copolymer, and a petroleum resin were weighed and added to a reaction kettle at a mass ratio of 20 : 3:10 : 10, the reaction kettle was heated to a temperature of 160°C and vacuumed, and the mixture was stirred for 120 min to obtain a modified polyolefin resin. In parts by mass, 50 parts of the above modified polyolefin resin was weighed, then 5 parts of paraffin wax, 0.2 parts of an antioxidant, 0.2 parts of an anti-aging agent, and 50 parts of a conductive agent graphene were added, and the mixture was first stirred at 1200 rpm/min for 60 min and then stirred at 800 rpm/min for 30 min until the components were uniformly mixed, followed by filling and discharging to obtain the primer adhesive.

2. Preparation of composite current collector

(1) Positive electrode composite current collector

The prepared primer adhesive described above was charged into a hot melt adhesive dispensing machine (ET-420D, Yishi Zhitong Technology Co., Ltd.); with an adhesive dispensing temperature being 180°C, the primer adhesive was coated onto an aluminum foil (the thickness of the aluminum foil being 13 μm) and the coating thickness of the primer adhesive was 5 μm; after cooling and curing, the resultant positive electrode composite current collector was wound for later use.

(2) Negative electrode composite current collector

The prepared primer adhesive described above was charged into a hot melt adhesive dispensing machine (ET-420D, Yishi Zhitong Technology Co., Ltd.); with an adhesive dispensing temperature being 180°C, the primer adhesive was coated onto a copper foil (the thickness of the copper foil being 6 μm) and the coating thickness of the primer adhesive was 5 μm; after cooling and curing, the resultant negative electrode composite current collector was wound for later use.

3. Preparation of battery electrode plate

(1) Positive electrode plate

Dry positive electrode film layer: A positive electrode active material, i.e. $LiNi_{0.5}Co_{0.2}Mn_{0.3}O_2$ (NCM523), a conductive agent, i.e. carbon black, a binder which can be fibered, i.e. polytetrafluoroethylene were weighed at the mass ratio of 92 : 4 : 4; NCM523 and carbon black were added to a mixing barrel of an internal mixer (10 L, Guangdong Lina Industrial Co., Ltd.) and mixed with stirring at 100 rpm/min for 10 min; and then the binder which can be fibered, i.e. polytetrafluoroethylene was added, first mixed with stirring at 200 rpm/min for 10 min until the materials were uniformly mixed, and then mixed with stirring at 400 rpm/min for 30 min for fibering. The mixed material was placed into a roller press (mode: MSK-H2300-E-CBTR, instrument manufacturer: Shenzhen Kejing Zhida technology Company) and hot rolled at 180°C into a self-supported film, thus obtaining the dry positive electrode film layer.
Then, the prepared dry positive electrode film layer was attached together with the positive electrode composite current collector described in part 2 above, placed into a roller press (mode: MSK-H2300-E-CBTR, instrument manufacturer: Shenzhen Kejing Zhida technology Company) and hot rolled at 160°C to obtain the positive electrode plate.

(2) Negative electrode plate

Dry negative electrode film layer: A negative electrode active material, i.e. graphite, a conductive agent, i.e. carbon black, a binder which can be fibered, i.e. polyvinylidene fluoride were weighed at the mass ratio of 92 : 4 : 4; graphite and carbon black were added to a mixing barrel of an internal mixer (10 L, Guangdong Lina Industrial Co., Ltd.) and mixed with stirring at 100 rpm/min for 10 min; and then the binder which can be fibered, i.e. polyvinylidene fluoride was added, first mixed with stirring at 200 rpm/min for 10 min until the materials were uniformly mixed, and then mixed with stirring at 400 rpm/min for 30 min for fibering. The mixed material was placed into a roller press (mode: MSK-H2300-E-CBTR, instrument manufacturer: Shenzhen Kejing Zhida technology Company) and hot rolled at 180°C into a self-supported film, thus obtaining the dry negative electrode film layer.
Then, the prepared dry negative electrode film layer was attached together with the negative electrode composite current collector described in part 2 above, placed into a roller press (mode: MSK-H2300-E-CBTR, instrument manufacturer: Shenzhen Kejing Zhida technology Company) and hot rolled at 160°C to obtain the positive electrode plate.

Examples 2-5

The preparation of the primer adhesive, composite current collector and battery electrode plate substantially follows example 1, except that the parts by mass of the modified polyolefin resin in the preparation of the primer adhesive were different. See table 1 for specific details.

Examples 6-10

The preparation of the primer adhesive, composite current collector and battery electrode plate substantially follows example 1, except that the parts by mass of the conductive material in the preparation of the primer adhesive were different. See table 1 for specific details.

Examples 11-14

The preparation of the primer adhesive, composite current collector and battery electrode plate substantially follows example 1, except that the mass ratios of the components of the modified polyolefin resin in the preparation of the primer adhesive were different. See table 1 for specific details.

Example 15

The preparation of the primer adhesive, composite current collector and battery electrode plate substantially follows example 1, except that in the preparation of the primer adhesive, polypropylene, maleic anhydride, a styrene-isoprene-styrene block copolymer, and a petroleum resin were weighed at a mass ratio of 20 : 3 : 10 : 10 to prepare the modified polyolefin resin. See table 1 for specific details.

Example 16

The preparation of the primer adhesive, composite current collector and battery electrode plate substantially follows example 1, except that in the preparation of the primer adhesive, an amorphous poly α-olefin resin, an ethylene-vinyl acetate copolymer, maleic anhydride, a styrene-ethylene-butylene-styrene block copolymer, and a petroleum resin were weighed at a mass ratio of 10 : 10 : 3 : 10 : 10 to prepare the modified polyolefin resin. See table 1 for specific details.

Example 17

The preparation of the primer adhesive, composite current collector and battery electrode plate substantially follows example 1, except that in the preparation of the primer adhesive, polyethylene, maleic anhydride, a styrene-ethylene-butylene-styrene block copolymer, and a petroleum resin were weighed at a mass ratio of 20 : 3 : 10 : 10 to prepare the modified polyolefin resin. See table 1 for specific details.

Example 18

The preparation of the primer adhesive, composite current collector and battery electrode plate substantially follows example 1, except that in the preparation of the primer adhesive, polypropylene, maleic anhydride, a styrene-butadiene copolymer, and a petroleum resin were weighed at a mass ratio of 20 : 3 : 10 : 10 to prepare the modified polyolefin resin. See table 1 for specific details.

Example 19

The preparation of the primer adhesive, composite current collector and battery electrode plate substantially follows example 1, except that the coating thickness of the primer adhesive in the preparation of the composite current collector was 8 μm. See table 1 for specific details.

Example 20

The preparation of the primer adhesive, composite current collector and battery electrode plate substantially follows example 1, except that the coating thickness of the primer adhesive in the preparation of the composite current collector was 10 μm. See table 1 for specific details.

Comparative Example 1

(1) Positive electrode plate

The preparation of the dry positive electrode film layer substantially follows example 1. The prepared dry positive electrode film layer was attached together with a carbon-coated aluminum foil (purchased from Suzhou Qiandingli Technology Co., Ltd., the carbon layer comprising a hot melt adhesive and a carbon material, the coating thickness being 3 μm), placed into a roller press and hot rolled at 160°C to obtain the positive electrode plate.

(2) Negative electrode plate

The preparation of preparation of the dry negative electrode film layer substantially follows example 1. The prepared dry negative electrode film layer was attached together with a carbon-coated copper foil (purchased from Shanghai Zhaoyuan Industrial Co., Ltd., the carbon layer comprising a hot melt adhesive and a carbon material, the coating thickness being 3 μm), placed into a roller press and hot rolled at 160°C to obtain the negative electrode plate.

II. Test for relevant parameter and performance

(1) Measurement of the weight average molecular weight of the polyolefin resin by means of gel permeation chromatography

A Waters 2695 Isocratic HPLC gel chromatograph (differential refractive index detector 2141) was used. A polystyrene solution sample with a mass fraction of 3.0% was used as a reference, and a matching chromatographic column (oily: Styragel HT5 DMF7.8 * 300 mm + Styragel HT4) was selected. A purified N-methylpyrrolidone (NMP) solvent was used to prepare a 3.0% glue solution of the modified polyolefin resin, and the prepared solution was let stand for one day for later use. During the test, first, a syringe was rinsed several times by sucking tetrahydrofuran. Then, 5 ml of the experimental solution was sucked, the air in the syringe was removed, and the needle tip was wiped until dry. Finally, the sample solution was slowly injected into the sample inlet. The data were obtained after the readings were stable, thus obtaining the weight average molecular weight of the modified polyolefin resin.

(2) Test of volume resistivity

3 * 3 mm small discs were cut at the left, middle, and right parts of a sample. The indicator light of an electrode plate resistance meter from Yuanneng Technology was turned on, the small disc was placed at an appropriate position of the "probe" of the film layer resistance meter, the " Start" button was clicked, and the reading can be read once it was stable. Each small disc was tested at two positions, and the average of the six measurements was finally calculated to determine the volume resistivity of the sample.

The results were shown in Table 2.

(3) Test for adhesive force

The sample was cut into a size of 20 * 100 mm for later use; the surface to be tested of the sample was adhered to a double-sided tape, and compacted by means of a press roller, making the double-sided tape to be fully attached to the sample; the other side of the double-sided tape attached to the sample was adhered to a stainless steel surface, and one end of the sample was bent reversely with a bending angle of 180°; a high-iron tensile machine was used for testing; one end of the stainless steel was fixed to the clamp below the tensile machine, and the bent end of the sample was fixed to the clamp above the tensile machine; the angle of the sample was adjusted to ensure that the upper and lower ends were in a vertical position, and then the sample was stretched at a speed of 50 mm/min until the samples was entirely peeled off from a substrate; and the displacement and force during the process were recorded. It was generally believed that the force at equilibrium was the adhesive force of the sample.

The adhesive forces of the samples were respectively tested before and after soaking in the electrolyte solution for different times. The results were shown in Tables 2 and 3.

The electrolyte solution for soaking was prepared as follows: Ethylene carbonate (EC), ethyl methyl carbonate (EMC), and diethyl carbonate (DEC) were mixed at a volume ratio of 1 : 1 : 1, and then $LiPF_6$ was uniformly dissolved in the above solution to obtain an electrolyte solution, where the concentration of $LiPF_6$ was 1 mol/L.

Table 1 Relevant parameters of primer adhesive for dry electrode of the present application (amounts of components of primer adhesive being in parts by mass)

| Example No. | Modified polyolefin resin | | | | Conductive material | | | Additive | | Paraffin wax |
|---|---|---|---|---|---|---|---|---|---|---|
| | Component | Content | Mass ratio of components | Weight average molecular weight (ten thousand) | Type | Content | Dv50 | Content of antioxidant | Content of anti-aging agent | Content |
| Example 1 | PP, MAH, SBES, C5 | 50 | 20 : 3 : 10 : 10 | 150 | Graphene | 50 | 20 nm | 0.2 | 0.2 | 5 |
| Example 2 | PP, MAH, SBES, C5 | 40 | 20 : 3 : 10 : 10 | 150 | Graphene | 50 | 20 nm | 0.2 | 0.2 | 5 |
| Example 3 | PP, MAH, SBES, C5 | 30 | 20 : 3 : 10 : 10 | 150 | Graphene | 50 | 20 nm | 0.2 | 0.2 | 5 |
| Example 4 | PP, MAH, SBES, C5 | 60 | 20 : 3 : 10 : 10 | 150 | Graphene | 50 | 20 nm | 0.2 | 0.2 | 5 |
| Example 5 | PP, MAH, SBES, C5 | 70 | 20 : 3 : 10 : 10 | 150 | Graphene | 50 | 20 nm | 0.2 | 0.2 | 5 |
| Example 6 | PP, MAH, SBES, C5 | 50 | 20 : 3 : 10 : 10 | 150 | Graphene | 10 | 20 nm | 0.2 | 0.2 | 5 |
| Example 7 | PP, MAH, SBES, C5 | 50 | 20 : 3 : 10 : 10 | 150 | Graphene | 20 | 20 nm | 0.2 | 0.2 | 5 |
| Example 8 | PP, MAH, SBES, C5 | 50 | 20 : 3 : 10 : 10 | 150 | Graphene | 30 | 20 nm | 0.2 | 0.2 | 5 |
| Example 9 | PP, MAH, SBES, C5 | 50 | 20 : 3 : 10 : 10 | 150 | Graphene | 40 | 20 nm | 0.2 | 0.2 | 5 |
| Example 10 | PP, MAH, SBES, C5 | 50 | 20 : 3 : 10 : 10 | 150 | Graphene | 60 | 20 nm | 0.2 | 0.2 | 5 |
| Example 11 | PP, MAH, SBES, C5 | 50 | 20 : 1 : 10: 10 | 150 | Graphene | 50 | 20 nm | 0.2 | 0.2 | 5 |
| Example 12 | PP, MAH, SBES, C5 | 50 | 20 : 2 : 10: 10 | 150 | Graphene | 50 | 20 nm | 0.2 | 0.2 | 5 |
| Example 13 | PP, MAH, SBES, C5 | 50 | 20: 4 : 10: 10 | 150 | Graphene | 50 | 20 nm | 0.2 | 0.2 | 5 |

(continued)

| Example No. | Modified polyolefin resin | | | | Conductive material | | | Additive | | Paraffin wax |
|---|---|---|---|---|---|---|---|---|---|---|
| | Component | Content | Mass ratio of components | Weight average molecular weight (ten thousand) | Type | Content | Dv50 | Content of antioxidant | Content of anti-aging agent | Content |
| Example 14 | PP, MAH, SBES, C5 | 50 | 20: 5 : 10: 10 | 150 | Graphene | 50 | 20 nm | 0.2 | 0.2 | 5 |
| Example 15 | PP, MAH, SIS, C5 | 50 | 20 : 3 : 10 : 10 | 130 | Graphene | 50 | 20 nm | 0.5 | 0.5 | 5 |
| Example 16 | APAO, EVA, MAH, SBES, C5 | 50 | 10 : 10 :3 : 10 : 10 | 120 | Graphene | 50 | 20 nm | 0.5 | 0.5 | 5 |
| Example 17 | PE, MAH, SBES, C5 | 50 | 20 : 3 : 10 : 10 | 150 | Graphene | 50 | 20 nm | 0.5 | 0.5 | 5 |
| Example 18 | PP, MAH, SBS, C5 | 50 | 20 : 3 : 10 : 10 | 150 | Graphene | 50 | 20 nm | 0.5 | 0.5 | 5 |

Table 2 Relevant parameters and performance results of composite current collector of the present application

| Example No. | Composite current collector | | Volume resistivity ($\Omega \cdot m$) | Adhesive force between primer adhesive layer and current collector (N/m) | | | |
|---|---|---|---|---|---|---|---|
| | Type | Thickness ($\mu m$) | | Before soaking | Soaking for 1 day | Soaking for 4 days | Soaking for 7 days |
| Example 1 | Positive electrode | 5 | 8.245 | 980 | 992 | 974 | 917 |
| | Negative electrode | 5 | 8.292 | 1050 | 1123 | 994 | 945 |
| Example 2 | Positive electrode | 5 | 7.241 | 878 | 868 | 721 | 701 |
| | Negative electrode | 5 | 7.301 | 899 | 821 | 785 | 711 |
| Example 3 | Positive electrode | 5 | 6.912 | 865 | 856 | 765 | 721 |
| | Negative electrode | 5 | 6.881 | 886 | 876 | 821 | 802 |
| Example 4 | Positive electrode | 5 | 9.342 | 995 | 993 | 956 | 921 |
| | Negative electrode | 5 | 9.290 | 1100 | 1121 | 995 | 912 |
| Example 5 | Positive electrode | 5 | 11.274 | 1231 | 1201 | 1139 | 1032 |
| | Negative electrode | 5 | 10.947 | 1210 | 1196 | 1045 | 1011 |
| Example 6 | Positive electrode | 5 | 33.012 | 1180 | 1030 | 1001 | 977 |
| | Negative electrode | 5 | 32.832 | 1211 | 1134 | 1032 | 973 |
| Example 7 | Positive electrode | 5 | 26.402 | 1170 | 1098 | 1081 | 1011 |
| | Negative electrode | 5 | 30.032 | 1150 | 1073 | 991 | 925 |
| Example 8 | Positive electrode | 5 | 26.642 | 1091 | 1111 | 1098 | 1002 |
| | Negative electrode | 5 | 25.131 | 1150 | 1102 | 1008 | 981 |
| Example 9 | Positive electrode | 5 | 16.321 | 999 | 942 | 894 | 857 |
| | Negative electrode | 5 | 15.432 | 954 | 993 | 903 | 872 |
| Example 10 | Positive electrode | 5 | 5.435 | 845 | 865 | 811 | 737 |
| | Negative electrode | 5 | 5.312 | 910 | 911 | 876 | 801 |

(continued)

| Example No. | Composite current collector | | Volume resistivity ($\Omega \cdot m$) | Adhesive force between primer adhesive layer and current collector (N/m) | | | |
|---|---|---|---|---|---|---|---|
| | Type | Thickness ($\mu m$) | | Before soaking | Soaking for 1 day | Soaking for 4 days | Soaking for 7 days |
| Example 11 | Positive electrode | 5 | 7.659 | 865 | 876 | 802 | 786 |
| | Negative electrode | 5 | 7.492 | 811 | 792 | 752 | 734 |
| Example 12 | Positive electrode | 5 | 7.651 | 893 | 883 | 821 | 743 |
| | Negative electrode | 5 | 7.745 | 881 | 852 | 814 | 761 |
| Example 13 | Positive electrode | 5 | 8.432 | 1230 | 1139 | 1102 | 1008 |
| | Negative electrode | 5 | 7.832 | 1320 | 1268 | 1232 | 1148 |
| Example 14 | Positive electrode | 5 | 8.832 | 1340 | 1231 | 1102 | 1008 |
| | Negative electrode | 5 | 8.012 | 1343 | 1282 | 1225 | 1161 |
| Example 15 | Positive electrode | 5 | 8.641 | 1020 | 1034 | 981 | 931 |
| | Negative electrode | 5 | 8.012 | 1021 | 993 | 951 | 911 |
| Example 16 | Positive electrode | 5 | 8.835 | 1191 | 1083 | 992 | 982 |
| | Negative electrode | 5 | 8.402 | 1213 | 1091 | 964 | 941 |
| Example 17 | Positive electrode | 5 | 8.431 | 995 | 940 | 921 | 881 |
| | Negative electrode | 5 | 8.348 | 1082 | 993 | 934 | 903 |
| Example 18 | Positive electrode | 5 | 9.321 | 984 | 981 | 930 | 878 |
| | Negative electrode | 5 | 9.012 | 1102 | 1004 | 974 | 911 |
| Example 19 | Positive electrode | 8 | 10.215 | 1430 | 1378 | 1301 | 1298 |
| | Negative electrode | 8 | 10.191 | 1390 | 1343 | 1234 | 1201 |
| Example 20 | Positive electrode | 10 | 15.991 | 1532 | 1521 | 1487 | 1401 |
| | Negative electrode | 10 | 16.692 | 1498 | 1454 | 1415 | 1321 |

Table 3 Performance results of battery electrode plate

| Example No. | Battery electrode plate | Adhesive force between electrode plate film layer and composite current collector (N/m) | | | |
|---|---|---|---|---|---|
| | | Before soaking | Soaking for 1 day | Soaking for 4 days | Soaking for 7 days |
| Example 1 | Positive electrode | 25.3 | 26.9 | 22.3 | 19.4 |
| | Negative electrode | 24.9 | 25.4 | 21.6 | 19.1 |
| Example 2 | Positive electrode | 24.3 | 23.9 | 22.1 | 18.3 |
| | Negative electrode | 24.1 | 24.4 | 21.2 | 18.8 |
| Example 3 | Positive electrode | 22.3 | 22.9 | 21.4 | 17.3 |
| | Negative electrode | 22.5 | 22.1 | 20.9 | 18.1 |
| Example 4 | Positive electrode | 27.3 | 27.1 | 23.3 | 20.1 |
| | Negative electrode | 26.9 | 26.6 | 24.6 | 20.4 |
| Example 5 | Positive electrode | 28.3 | 27.9 | 26.3 | 21.6 |
| | Negative electrode | 28.7 | 28.4 | 25.6 | 20.8 |
| Example 6 | Positive electrode | 29.3 | 27.9 | 25.3 | 18.4 |
| | Negative electrode | 29.9 | 26.4 | 24.6 | 19.5 |
| Example 7 | Positive electrode | 28.3 | 25.9 | 23.3 | 17.4 |
| | Negative electrode | 28.9 | 25.4 | 23.6 | 18.6 |
| Example 8 | Positive electrode | 28.3 | 27.9 | 23.3 | 19.8 |
| | Negative electrode | 28.9 | 26.4 | 22.6 | 18.1 |
| Example 9 | Positive electrode | 27.3 | 24.9 | 21.8 | 17.4 |
| | Negative electrode | 27.9 | 24.8 | 20.6 | 17.1 |
| Example 10 | Positive electrode | 20.3 | 19.2 | 17.3 | 16.7 |
| | Negative electrode | 21.9 | 19.4 | 17.8 | 17.1 |
| Example 11 | Positive electrode | 19.4 | 19.1 | 17.3 | 16.6 |
| | Negative electrode | 18.5 | 18.6 | 17.1 | 15.9 |
| Example 12 | Positive electrode | 22.1 | 21.9 | 20.6 | 19.9 |
| | Negative electrode | 23.5 | 23.4 | 21.8 | 20.4 |
| Example 13 | Positive electrode | 27.3 | 26.1 | 24.3 | 22.5 |
| | Negative electrode | 26.7 | 26.4 | 25.2 | 23.1 |
| Example 14 | Positive electrode | 28.3 | 27.4 | 25.3 | 20.1 |
| | Negative electrode | 28.9 | 27.1 | 24.6 | 21.5 |
| Example 15 | Positive electrode | 25.8 | 25.9 | 22.6 | 19.5 |
| | Negative electrode | 25.3 | 24.4 | 22.8 | 18.2 |
| Example 16 | Positive electrode | 26.3 | 25.9 | 23.3 | 18.1 |
| | Negative electrode | 26.9 | 25.1 | 22.6 | 18.8 |
| Example 17 | Positive electrode | 24.3 | 22.1 | 20.9 | 17.4 |
| | Negative electrode | 24.9 | 23.4 | 20.7 | 16.6 |

(continued)

| Example No. | Battery electrode plate | Adhesive force between electrode plate film layer and composite current collector (N/m) | | | |
|---|---|---|---|---|---|
| | | Before soaking | Soaking for 1 day | Soaking for 4 days | Soaking for 7 days |
| Example 18 | Positive electrode | 20.3 | 18.9 | 17.3 | 15.4 |
| | Negative electrode | 19.9 | 20.4 | 18.6 | 14.5 |
| Example 19 | Positive electrode | 29.3 | 26.9 | 22.3 | 19.4 |
| | Negative electrode | 29.9 | 25.4 | 21.6 | 19.1 |
| Example 20 | Positive electrode | 31.5 | 28.9 | 25.3 | 20.3 |
| | Negative electrode | 32.7 | 27.4 | 25.6 | 21.5 |
| Comparative Example 1 | Positive electrode | 32.5 | 23.4 | 16.7 | 10.9 |
| | Negative electrode | 31.7 | 22.1 | 16.0 | 12.1 |

As can be seen from the above results, compared with comparative example 1, the primer adhesive for a dry electrode of the present application can greatly improve the adhesive force between the dry electrode film layer and the current collector, which is an advantage particularly evident in electrolyte solution soaking environments, and can increase the interfacial contact between the active material and the current collector, thus making it possible to effectively avoid the fall off of the electrode film layer, powder shedding, etc., during use of the battery.

It should be noted that the present application is not limited to the above embodiments. The above embodiments are exemplary only, and any embodiment within the scope of the technical solution of the present application that has substantially the same composition and has the same effects as the technical idea is encompassed in the technical scope of the present application. In addition, without departing from the gist of the present application, various modifications that may be conceived by those skilled in the art to the embodiments, and other modes constructed by combining some of the constituent elements of the embodiments are also encompassed in the scope of the present application.

**Claims**

1. A primer adhesive for a dry electrode, **characterized in that** the primer adhesive comprises the following components in parts by mass:

   30-70  parts of a modified polyolefin resin, and
   10-60  parts of a conductive material,

   wherein the modified polyolefin resin is a copolymer formed by the polymerization of maleic anhydride, polyolefin and a petroleum resin.

2. The primer adhesive for a dry electrode according to claim 1, **characterized in that** the primer adhesive comprises the following components in parts by mass:

   40-60  parts of the modified polyolefin resin, and
   20-50  parts of the conductive material.

3. The primer adhesive for a dry electrode according to claim 1 or 2, **characterized in that** the modified polyolefin resin has a weight average molecular weight of 1,000,000-1,500,000.

4. The primer adhesive for a dry electrode according to claim 1 or 2, **characterized in that** the polyolefin is selected from one or more of: polyethylene, polypropylene, an ethylene-vinyl acetate copolymer, a styrene-butadiene copolymer, a styrene-ethylene-butylene-styrene block copolymer, a styrene-isoprene-styrene block copolymer and an amorphous poly α-olefin resin; and optionally, the polyolefin is selected from one or more of: polyethylene, polypropylene, an ethylene-vinyl acetate copolymer, and a styrene-ethylene-butylene-styrene block copolymer.

5. The primer adhesive for a dry electrode according to claim 1 or 2, **characterized in that** the conductive material is a carbon material selected from one or more of: carbon black, graphene, carbon nanotubes, graphite and mesophase carbon microspheres.

6. The primer adhesive for a dry electrode according to claim 1 or 2, **characterized in that** the mass ratio of the modified polyolefin resin to the conductive material is 0.8-1.7 : 1, optionally 1-1.4 : 1.

7. The primer adhesive for a dry electrode according to claim 1 or 2, **characterized in that** the maleic anhydride, polyolefin and petroleum resin in the modified polyolefin resin satisfy the following formula:

$$0.1 \leq \frac{a1(a2+a3)}{a2*a3} \leq 0.7,$$

wherein a1 is the mass percentage of the maleic anhydride in the modified polyolefin resin, a2 is the mass percentage of the polyolefin in the modified polyolefin resin, and a3 is the mass percentage of the petroleum resin in the modified polyolefin resin.

8. The primer adhesive for a dry electrode according to claim 1 or 2, **characterized in that** the primer adhesive further comprises 0.1-1 parts by mass, optionally 0.2-0.5 parts by mass of an additive, wherein the additive includes an antioxidant and an anti-aging agent.

9. The primer adhesive for a dry electrode according to claim 1 or 2, **characterized in that** the primer adhesive further comprises 1-10 parts by mass of paraffin wax.

10. A method for preparing a primer adhesive for a dry electrode according to any one of claims 1-9, **characterized in that** the method comprises

    S1) preparing a modified polyolefin resin; and
    S2) mixing the modified polyolefin resin, a conductive material, an additive, and paraffin wax.

11. The method for preparing a primer adhesive for a dry electrode according to claim 10, **characterized in that** the preparing a modified polyolefin resin comprises copolymerizing maleic anhydride, polyolefin and a petroleum resin at 150-180°C to obtain the modified polyolefin resin.

12. A composite current collector, **characterized in that** the composite current collector comprises a primer adhesive layer, wherein the primer adhesive layer is provided on at least one surface of the current collector, the thickness of the primer adhesive layer on one surface of the current collector is 1-10 μm, optionally 5-8 μm, and the primer adhesive layer is formed by means of coating a primer adhesive for a dry electrode according to any one of claims 1-9.

13. A battery electrode plate, **characterized in that** the battery electrode plate comprises

    a composite current collector according to claim 12; and
    a dry electrode film layer, wherein the dry electrode film layer is provided on the primer adhesive layer in the composite current collector.

14. A secondary battery, **characterized by** comprising a battery electrode plate according to claim 13.

15. A battery module, **characterized by** comprising a secondary battery according to claim 14.

16. A battery pack, **characterized by** comprising a battery module according to claim 15.

17. A power consuming device, **characterized by** comprising at least one selected from a secondary battery according to claim 14, a battery module according to claim 15, or a battery pack according to claim 16.

FIG. 1

FIG. 2

FIG. 3

FIG. 4

FIG. 5

FIG. 6

## INTERNATIONAL SEARCH REPORT

| | International application No. |
|---|---|
| | **PCT/CN2022/108953** |

**A.    CLASSIFICATION OF SUBJECT MATTER**

H01M4/13(2010.01)i;H01M4/139(2010.01)i;H01M10/052(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 宁德时代, 干法, 干式, 电极, 阳极, 阴极, 正极, 负极, 集流体, 集流器, 集电体, 集电器, 粘结, 粘接, 粘合, 胶, 黏合, 聚烯烃, 聚乙烯, 聚丙烯, 苯乙烯, 极性, 马来酸酐, electrode, battery, anode, cathode, dry, current collector, foil, binder, polyolefin, polyethylene, polythene, polypropylene, +styrene+, polarity, Maleic anhydride

**C.    DOCUMENTS CONSIDERED TO BE RELEVANT**

| Category* | Citation of document, with indication, where appropriate, of the relevant passages | Relevant to claim No. |
|---|---|---|
| Y | CN 114765251 A (SAMSUNG SDI CO., LTD.) 19 July 2022 (2022-07-19)<br>    description, paragraphs [0007]-[0024] and [0066]-[0075] | 1-17 |
| Y | CN 110511703 A (TUODI CHEMICAL (SHANGHAI) CO., LTD.) 29 November 2019<br>(2019-11-29)<br>    description, paragraphs [0005]-[0020] and [0055]-[0071] | 1-17 |
| Y | KR 20190051354 A (LG CHEMICAL LTD.) 15 May 2019 (2019-05-15)<br>    description, paragraphs [0019]-[0057] | 1-17 |
| Y | CN 107987759 A (AKCOME FILM & APPLIED NEW MATERIALS (SUZHOU) CO.,<br>LTD.) 04 May 2018 (2018-05-04)<br>    description, paragraphs [0005]-[0020] | 1-17 |
| A | US 2020028156 A1 (NAVITAS SYSTEMS LLC) 23 January 2020 (2020-01-23)<br>    entire document | 1-17 |
| A | JP 2013084587 A (CEMEDINE CO., LTD.) 09 May 2013 (2013-05-09)<br>    entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 February 2023** | **24 March 2023** |

| Name and mailing address of the ISA/CN | Authorized officer |
|---|---|
| **China National Intellectual Property Administration (ISA/<br>CN)<br>China No. 6, Xitucheng Road, Jimenqiao, Haidian District,<br>Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/108953**

| Patent document cited in search report | | | Publication date (day/month/year) | Patent family member(s) | | | Publication date (day/month/year) |
|---|---|---|---|---|---|---|---|
| CN | 114765251 | A | 19 July 2022 | US | 2022209220 | A1 | 30 June 2022 |
| | | | | KR | 20220097672 | A | 08 July 2022 |
| | | | | EP | 4024498 | A1 | 06 July 2022 |
| | | | | JP | 2022104913 | A | 12 July 2022 |
| CN | 110511703 | A | 29 November 2019 | CN | 110511703 | B | 08 February 2022 |
| KR | 20190051354 | A | 15 May 2019 | None | | | |
| CN | 107987759 | A | 04 May 2018 | None | | | |
| US | 2020028156 | A1 | 23 January 2020 | None | | | |
| JP | 2013084587 | A | 09 May 2013 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106654177 A

**Non-patent literature cited in the description**

- *CHEMICAL ABSTRACTS,* 108-31-6
- *CHEMICAL ABSTRACTS,* 9002-88-4
- *CHEMICAL ABSTRACTS,* 9003-07-0
- *CHEMICAL ABSTRACTS,* 24937-78-8
- *CHEMICAL ABSTRACTS,* 9003-55-8